(19) Europäisches Patentamt
European Patent Office
Office européen des brevets

(11) **EP 1 930 644 A1**

(12) **EUROPÄISCHE PATENTANMELDUNG**

(43) Veröffentlichungstag:
**11.06.2008 Patentblatt 2008/24**

(51) Int Cl.:
***F16L 33/22*** *(2006.01)* ***F16L 13/14*** *(2006.01)*

(21) Anmeldenummer: **07023604.7**

(22) Anmeldetag: **05.12.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(30) Priorität: **05.12.2006 DE 102006057243**
**04.06.2007 DE 102007026172**

(71) Anmelder:
• **Dömer GmbH & Co. KG**
**57368 Lennestadt (DE)**

• **Franz Funke GmbH & Co. KG**
**59846 Sundern (DE)**

(72) Erfinder:
• **Asbeck, Jochen, Dr.-Ing.**
**57439 Attendorn (DE)**
• **Kemper, Wolfgang, Dr.**
**58708 Menden (DE)**

(74) Vertreter: **Neumann, Ernst Dieter et al**
**Neumann Müller Oberwalleney & Partner**
**Patentanwälte**
**Overstolzenstrasse 2a**
**50677 Köln (DE)**

(54) **Schiebehülse**

(57) Schiebehülse (11) zur Festlegung eines Schlauch- oder Rohrendes auf einem Anschlußstutzen, wobei die Schiebehülse (11) aus einem rundgebogenen Bandabschnitt aus Metallband besteht und am Stoß der Bandendkanten (13,16) spielfrei ineinandergreifende Feder-Nut-Elemente (12,15) mit Hinterschneidungen - in Umfangsrichtung betrachtet - aufweist.

FIG. 1

EP 1 930 644 A1

**Beschreibung**

Die Erfindung betrifft eine Schiebehülse zur Festlegung eines Schlauch- oder Rohrendes auf einem Anschlußstutzen sowie ein Verfahren zur Herstellung derartiger Schiebehülsen. Der Anschlußstutzen kann hierbei Bestandteil einer Absperr- oder Verteilerarmatur sein, an der das Schlauch- oder Rohrende angeschlossen wird, oder Bestandteil eines Doppelstutzens sein, der zum Verbinden zweier Schlauch- oder Rohrenden dient. Die Schläuche oder Rohre dienen ganz allgemein dem Leiten von flüssigen oder gasförmigen Medien, die unter Druck stehen.

Schiebehülsen der vorbezeichneten Art und für den genannten Zweck sind als Bestandteile sogenannter zweiteiliger metallischer Klemmverbinder beispielsweise in der DE 88 05 379 U1, der DE 88 13 209 U1 und der DE 103 45 286 84 beschrieben. Diese zweiteiligen Anordnungen umfassen hierbei als erstes Teil einen Anschlußstutzen, der üblicherweise mit Umfangsrillen oder Umfangsnuten versehen ist und auf den ein zunächst unbewehrtes Schlauch- oder Rohrende aufgeschoben wird, sowie als zweites Teil eine zuvor auf das Schlauch- oder Rohrende aufgefädelte Schiebehülse, die anschließend über den Schlauch bzw. das Rohr im Bereich des innenliegenden Anschlußstutzens geschoben wird. Das notwendigerweise elastisch oder plastisch verformbare Material des Schlauch- oder Rohrendes formt sich dabei in die Umfangsrillen oder Umfangsnuten auf dem Anschlußstutzen ein. Es ist bekannt, die hierbei verwendeten Schiebehülsen mit einer inneren Aufgleitrundung oder einer inneren Aufgleitfase zu versehen, um das Aufschieben auf das gegebenenfalls aufgeweitete und zumindest innen abgestützte Schlauch- oder Rohrende zu erleichtern. Aufgrund der hohen Radialkräfte, denen Schiebehülsen der hiermit beschriebenen Art beim Herstellen der beschriebenen Verbindung unterworfen sind, werden die Schiebehülsen als Drehteile erzeugt, die von Rohrabschnitten ausgehend mechanisch gefertigt werden. Diese Art der Herstellung ist sehr kostenintensiv und hat den Nachteil, daß die Durchmesser der Schiebehülsen von den Rohrdurchmessern der aus dem geforderten Material zur Verfügung stehenden Rohre abhängig sind.

Aus der DE 40 09 259 A1 und der DE 40 21 746 C2 ist es bekannt, Spannringe zur Befestigung von Faltenbälgen auf Gelenk- oder Wellenteilen in der Weise herzustellen, daß von endlosem Bandmaterial Bandabschnitte abgeteilt werden, deren Bandendkanten mit - in Umfangsrichtung betrachtet - Hinterschneidungen aufweisenden Formschluß-Elementen abgeteilt werden. Die Bandabschnitte werden dann rundgebogen und die Formschluß-Elemente ineinandergefügt.

Die derart ineinandergreifenden Bandenden werden dann notwendigerweise verquetscht oder punktgeschweißt, um bei anschließenden Durchmesserreduzierungen zusammenzuhalten. Der eigentliche Spannvorgang erfolgt durch thermisches Schrumpfen der Spannringe oder durch mechanisches Crimpen, d.h. radiales Stauchen der Spannringe. Das Material muß hierbei vor dem abschließenden Herstellen der Verbindung weich sein. Die dabei von den Spannringen aufbringbaren radialen Kräfte sind gering und reichen allenfalls zum mechanischen Fixieren von Faltenbälgen oder dergleichen, insbesondere wenn eine Innennut am Gelenkbauteil oder an der Welle vorgesehen ist, in die der Faltenbalg formschlüssig eingreifen kann. Eine fluiddichte Verbindung für hohen hydraulischen oder pneumatischen Innendruck ist mit diesen Spannringen nicht darstellbar, insbesondere nicht, wenn der Innendruck dynamischen Veränderungen unterliegt.

Der vorliegenden Erfindung liegt die Aufgabe zugrunde, neuartige Schiebehülsen und ein Verfahren zu ihrer Herstellung bereitzustellen, die kostengünstig sind und zur Herstellung fluiddichter hoch belastbarer Verbindungen zwischen Schlauch- oder Rohrenden und Anschlußstutzen geeignet sind.

Diese Aufgabe wird gelöst durch eine Schiebehülse zur Festlegung eines Schlauch- oder Rohrendes auf einem Anschlußstutzen, wobei die Schiebehülse aus einem rundgebogenem Bandabschnitt aus Metallband besteht und am Stoß der Bandendkanten mit einer formschlüssigen Verbindung verbunden ist. Hierbei ist insbesondere vorgesehen, daß die formschlüssige Verbindung von spielfrei ineinandergreifende Formschluß-Elementen mit Hinterschneidungen - in Umfangsrichtung betrachtet - gebildet wird. Mit den hiermit beschriebenen Merkmalen sind Schiebehülsen beliebigen Durchmessers auf äußerst kostengünstige Weise herstellbar, die hohen radialen Belastungen standhalten können, so daß sie zum Ersatz der bisherigen teuren aus Rohrmaterial gedrehten Schiebehülsen dienen können. Die Schiebehülsen sind dickwandig mit einem Verhältnis der Wanddicke zum Außendurchmesser von mehr als 10%, wobei die Wanddicke vorzugsweise mehr als 2 mm beträgt. Ein Sichern der Formschlußverbindungen nach dem Fügen der Bandenden ist hierdurch nicht unbedingt erforderlich. Das Abteilen einzelner Bandabschnitte vom endlosem Metallband erfolgt bevorzugt durch Stanzen, das Rundbiegen und Fügen gegebenenfalls in nur zwei Schritten, wobei in einem ersten Schritt aus dem geraden Bandmaterial zunächst ein U-förmiger Bügel und in einem zweiten Schritt die ringförmig geschlossene und an den Bandenden formschlüssig ineinandergreifende Hülse gebildet wird.

In besonders günstiger Ausgestaltung ist vorgesehen, daß die Schiebehülse eine plastisch umgeformte Innenkante aufweist, die eine Aufgleitfase oder eine Aufgleitrundung bildet. Darüberhinaus wird vorgeschlagen, daß die Schiebehülse auf dem Innenumfang plastisch eingeformte Einzelvertiefungen zur formschlüssigen Aufnahme von Material des Schlauch- oder Rohrendes aufweist oder daß die Schiebehülse auf dem Innenumfang eine plastisch eingeformte Umfangsnut zur formschlüssigen Aufnahme von Material des Schlauch- oder Rohrendes aufweist.

Hiermit werden wesentliche Elemente der Schiebehülse auf kostengünstige Weise darstellbar, ohne daß irgendwelche mechanischen, d.h. spanenden Bearbeitungsschritte, insbesondere Drehoperationen, erforderlich werden.

Bevorzugte Formgebungen und Bemessungen der Formschluß-Elemente an den beiden Bandendkanten sind in den Unteransprüchen bezeichnet, auf die hiermit inhaltlich Bezug genommen wird. Die dort gegebenen Definitionen führen zu einer äu-ßerst homogenen Materialbeanspruchung, was gleichzeitig eine Optimierung im Sinne einer Materialeinsparung bedeutet. Das Bandmaterial ist, wie bereits betont, relativ dickwandig, z. B. wird bei einer Nennweite, d. h. einem Innendurchmesser, der Schiebehülse von 16 mm eine Wandstärke von 2,2 mm vorgesehen.

Die erfindungsgemäße Schiebehülse kann - belastungsabhängig - aus unvergütetem Material, insbesondere aus Edelstahl, oder aus vergütetem Material, ebenfalls auch aus Edelstahl bestehen. Insbesondere bei hohen dynamischen Belastungen sind Vergütungsstähle zu bevorzugen, um bei hoher Lebensdauer gleich bleibende Festigkeit sicherzustellen. Sofern kein Edelstahl verwendet wird, ist eine Oberflächenbeschichtung der Schiebehülse zum Korrosionsschutz vorzusehen.

Das erfindungsgemäße Verfahren zur Herstellung einer Schiebehülse zur Festlegung eines Schlauch- oder Rohrendes auf einem Anschlußstutzen zeichnet sich dadurch aus, daß von endlosem Metallband Bandabschnitte abgeteilt werden, wobei die Trennstellen jeweils formschlüssige Verbindungselemente bilden, und daß die Bandabschnitte so rundgebogen werden, daß ein Verbindungselement an einer Bandendkante in ein Verbindungselement an der anderen Bandendkante formschlüssig eingreift. Die Verbindungselemente werden insbesondere als Formschluß-Elemente ausgebildet, die in Umfangsrichtung betrachtet Hinterschneidungen aufweisen und damit eine in Umfangsrichtung zugfeste Verbindung herstellen.

Wie bereits vorstehend genannt ist hierbei insbesondere vorgesehen, daß das endlose Bandmaterial - insbesondere vor dem Abteilen der Bandabschnitte - längs einer Kante gerollt wird, die nach dem Rundbiegen zu einer Innenkante wird, um eine innere Aufgleitfase oder eine innere Aufgleitrundung zu bilden.

Weiterhin wird vorgeschlagen daß das endlose Bandmaterial - insbesondere vor dem Abteilen der Bandabschnitte - mit Abstand zu einer Kante mit periodisch angeordneten Einprägungen versehen wird, die nach dem Rundbiegen auf dem Innenumfang verteilt liegen, oder daß das endlose Bandmaterial - insbesondere vor dem Abteilen der Bandabschnitte - mit Abstand zu einer Kante mit einer gerollten Längsnut versehen wird, die nach dem Rundbiegen auf den Innenumfang liegt.

Sofern, wie bevorzugt vorgeschlagen wird, Metallband aus Vergütungsstahl, insbesondere auch aus Edelstahl eingesetzt wird, findet das Vergüten, also die Wärmebehandlung der Schiebehülse nach dem Abteilen, Rundbiegen und formschlüssigem Fügen der Bandabschnitte des Metallbandes zu einer Hülse statt.

Bezüglich weiterer bevorzugter Verfahrensausgestaltungen wird auf die entsprechenden Unteransprüche verwiesen.

Bevorzugte Ausführungsbeispiele der Erfindung sind in den Zeichnungen dargestellt und werden nachstehend beschrieben.

Figur 1    zeigt eine erfindungsgemäße Schiebehülse in einer ersten Ausführung in Schrägansicht;

Figur 2    zeigt eine erfindungsgemäße Schiebehülse in einer zweiten Ausführung in Schrägansicht;

Figur 3    zeigt eine erfindungsgemäße Schiebehülse in einer dritten Ausführung in Schrägansicht.

Figur 4    zeigt einen Längsschnitt durch eine erfindungsgemäße Schiebehülse nach Art einer der Figuren 1 bis 3

a) in einer ersten Ausführung (oben) und
b) in einer zweiten Ausführung (unten);

Figur 5    zeigt einen Bandabschnitt zur Herstellung einer erfindungsgemäßen Schiebehülse nach Figur 1 abgewickelt, d.h. vor dem Rundbiegen.

Figur 6    zeigt eine Anordnung aus einem Anschlussflansch, einem darauf aufgeschobenen Schlauchende und einer darübergeschobenen erfindungsgemäßen Schiebehülse,

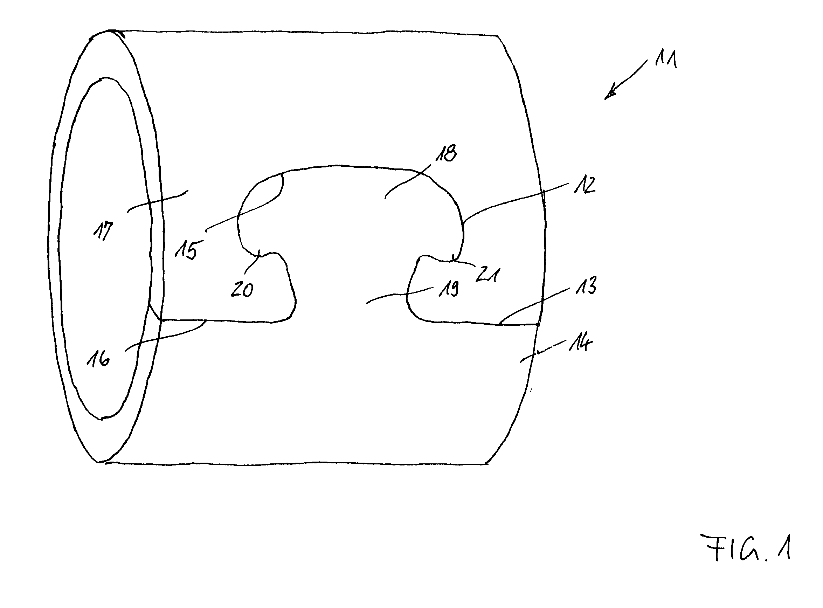

In Figur 1 ist eine erfindungsgemäße Schiebehülse 11 in einer ersten Ausführung gezeigt, die aus einem Bandabschnitt hergestellt ist, der rundgebogen ist und an dessen Bandenden sich komplementär ergänzende Formschluß-Elemente befinden, die spielfrei ineinandergefügt sind. Diese mit Hinterschneidungen -in Umfangsrichtung betrachtet- ineinandergreifenden Formschluß-Elemente sind eine pilzförmige Lasche 12, die auf einer geraden Bandendkante 13 mittig ansetzt und einem ersten Bandende 14 zuzuordnen ist, sowie eine pilzförmige Ausnehmung 15, die von einer geraden Bandendkante 16 ausgeht und einem zweiten Bandende 17 zuzuordnen ist. An der pilzförmigen Lasche 12 werden eine Kopfformation 18 und eine Stielformation 19 unterschieden, auf deren Formgebung noch später eingegangen wird. An der Kopfformation 18 sind in Umfangsrichtung betrachtet beiderseits Überhänge 20, 21 zu identifizieren, die eine Hinterschneidung zwischen den beiden Elementen auch in Querrichtung zum Band betrachtet herstellen. Die Stielstruktur erweitert sich von der Bandendkante zur Kopfstruktur hin ähnlich dem Verlauf einer Venturidüse. Die letztgenannten Einzelheiten werden nur in Bezug auf die Lasche 12 angegeben, wobei die Ausnehmung 15 jeweils in komplementärer Ausgestaltung die gleiche Form aufweist. Die Strukturen an den Bandenden sind jeweils durch Anbringen gleichartiger Schnitte an unmittelbar aneinanderstoßenden Bandabschnitten beim Abtrennen von endlosem Bandmaterial hergestellt, so daß kein Verschnitt entsteht. Nach dem Rundbiegen zur Schiebehülse 11 in beispielsweise zwei Umformschritten, bei denen zunächst eine U-Form und dann eine Ringform entstehen, kann die erfindungsgemäße Schiebehülse vergütet worden sein, so daß sie Federstahleigenschaft erhält und die ineinandergreifenden Formschluß-Elemente nicht der Gefahr eines radialen Auseinandergleitens unterliegen. Bei Innendruckbelastung der Schiebehülse als ganzes tritt an den Bandenden eine reine Zugbelastung auf, die ein radiales Auseinandergleiten der Formschluß-Elemente im Prinzip verhindert. Ungeachtet dessen kann beim Rundbiegen ein leichtes Verprägen oder Verquetschen des Bandmaterials, zumindest im Bereich der Formschluß-Elemente erfolgen, so daß die Verbindung zusätzlich gesichert ist.

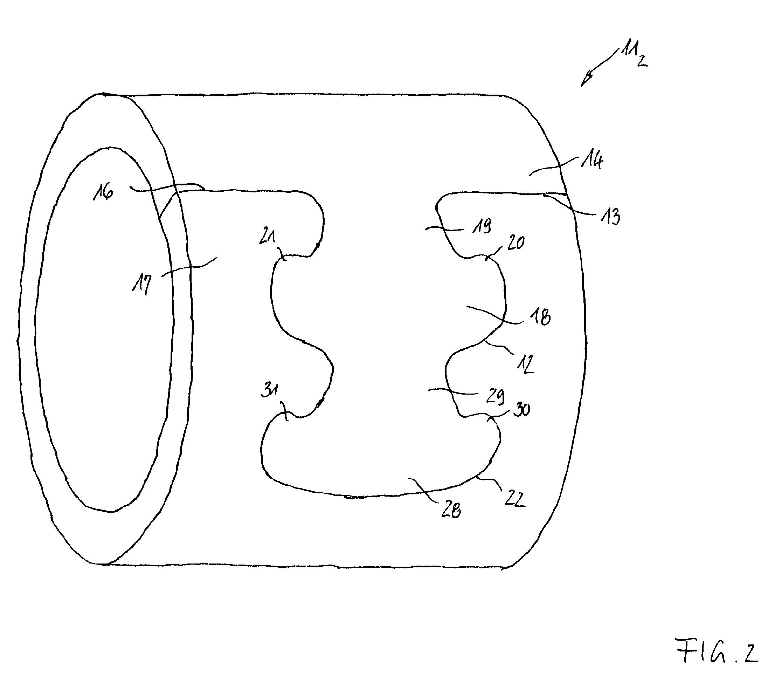

In Figur 2 ist eine Schiebehülse $11_2$ ähnlich wie in Figur 1 in abgewandelter Ausführung gezeigt, wobei hier allerdings ein erstes Bandende 14 mit einer Bandendkante 13 oben und ein zweites Bandende 17 mit einer Bandendkante 16 unten in der Darstellung zu erkennen sind. Gleiche Einzelheiten sind mit gleichen Bezugsziffern wie in Figur 1 belegt. Auf eine erste pilzförmige Lasche 12 ist eine zweite pilzförmige Lasche 22 aufgesetzt, die ebenfalls eine Kopfformation 28 und eine Stielformation 29 aufweist. Der Übergang von der ersten Pilzform 12 zur zweiten Pilzform 22 ist stetig gerundet. Auch die Kopfformation 28 weist Übergänge 30, 31 auf, ähnlich wie die erste Kopfformation 18 Überhänge 20, 21 zeigt. Alle übrigen Einzelheiten, insbesondere zur Herstellung der Ringsform und zur möglichen anschließenden Vergütung gegebenenfalls unter vorheriger Verprägung oder Verquetschung der Formschluß-Elemente, gelten sinngemäß auch für die Schiebehülse $11_2$.

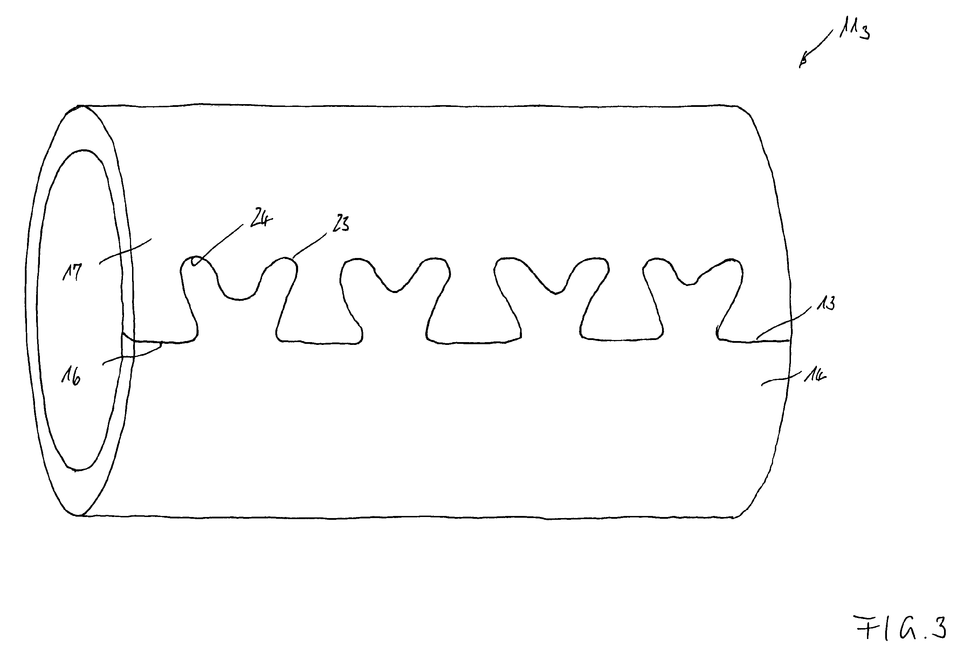

In Figur 3 ist eine Schiebehülse $11_3$ ähnlich wie in Figur 1 in abgewandelter Ausführung gezeigt, wobei ein erstes Bandende 14 mit einer Bandendkante 13 unten und ein zweites Bandende 17 mit einer Bandendkante 16 oben in der Darstellung zu erkennen sind. Gleiche Einzelheiten sind mit gleichen Bezugsziffern wie in Figur 1 belegt. Eine Mehrzahl von nebeneinanderliegenden Schwalbenschwanzformationen 23 am ersten Bandende 14 greift spielfrei in formgleiche Ausnehmungen 24 am zweiten Bandende 17 ein. Alle Kantenverläufe sind gerundet. Alle übrigen Einzelheiten, insbesondere zur Herstellung der Ringsform und zur möglichen anschließenden Vergütung gegebenenfalls unter vorheriger Verprägung oder Verquetschung der Formschluß-Elemente, gelten sinngemäß auch für die Schiebehülse $11_3$.

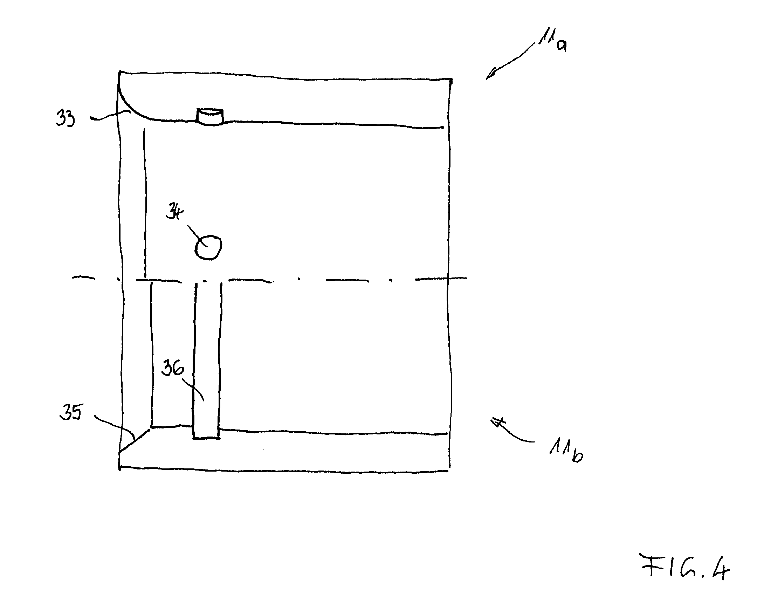

In Figur 4 sind eine Schiebehülse $11_a$ in einer ersten Ausführung (obere Bildhälfte) und eine Schiebehülse $11_b$ in einer zweiten Ausführung (untere Bildhälfte) im Längsschnitt gezeigt. Die Schiebehülse $11_a$ hat eine

Endkante mit einer inneren Rundung 33, die durch Kantenrollen des endlosen Bandmaterials vor dem Abtrennen einzelner Bandabschnitte hergestellt werden kann. Darüberhinaus hat die Schiebehülse $11_a$ auf dem Innenumfang verteilte Einzelvertiefungen 34, die ebenfalls am endlosen Bandmaterial durch spanlose Umformung in Form periodischer Stanz- oder Prägevorgänge hergestellt werden können. Die Schiebehülse $11_b$ hat an einer Innenkante eine konische Fase 35, die ebenfalls am endlosen Bandmaterial vor dem Abteilen einzelner Bandabschnitte durch Kantenrollen erzeugt sein kann. Weiterhin hat die Schiebehülse $11_b$ eine ebenfalls durch Längsrollen am endlosen Bandmaterial hergestellte Umfangsnut 36. Die Rundungen bzw. Fasen 33, 35 dienen zum Aufgleiten der Schiebehülse auf einen Schlauch oder ein Rohrstück, während die Ausnehmungen 34 und die Umfangsnut 36 zum Einfließen von Material des Schlauches oder Rohres dienen, auf das die Schiebehülse $11_a$, $11_b$ axial aufgeschoben werden soll.

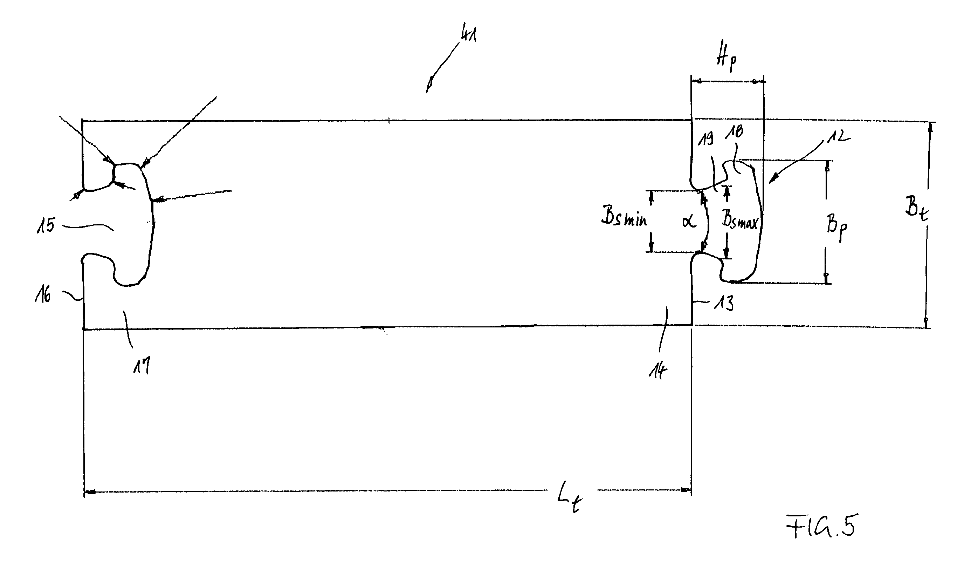

In Figur 5 ist ein Bandabschnitt 41 zur Herstellung einer Schiebehülse nach Figur 1 nach dem Längsabtrennen und vor dem Rundbiegen gezeigt. Es ist am linken Bandende 17 die Bandendkante 16 und die hiervon ausgehende pilzförmige Ausnehmung 15 erkennbar, während am rechten Bandende 14 die Lasche 12, die von der Bandendkante 13 ausgeht, erkennbar ist, an der die Kopfformation 18 und die Stielformation 19 zu unterscheiden sind. In der Zeichnung sind einzelne Größenangaben vorgesehen, die folgende Abkürzungen tragen

$L_t$: Gesamtlänge Bandabschnitt,
$B_t$: Gesamtbreite Bandabschnitt,
$H_p$: Höhe Pilzstruktur,
$B_p$: größte Breite Kopfformation,
Bsmin: kleinste Breite Stielformation,
Bsmax: größte Breite Stielformation.

Es gelten folgende bevorzugte Größenverhältnisse

$$\frac{Bp}{Bt} \quad \text{von 45 \% bis 60 \%}$$

$$\frac{Hp}{Bp} \quad \text{von 50 \% bis 65 \%}$$

$$\frac{Bs\,min}{Bt} \quad \text{von 25 \% bis 35 \%}$$

$$\frac{Bs\,max}{Bt} \quad \text{von 30 \% bis 40 \%}$$

Es ist erkennbar, daß sich die Breite der Stielformation von der Bandendkante aus bis zum Anschluß an die Kopfformation vergrößert, wobei sich die Stielformation unter einem Öffnungswinkel α von 35-43° öffnet, konkret mit einem Öffnungswinkel α von 38,9°. Weiterhin ist erkennbar, daß sich die Pilzform aus sich stetig aneinanderanschließenden Radien zusammensetzt, wodurch die Materialbelastung bei einer Innendruckbeanspruchung der Schiebehülse minimiert ist.

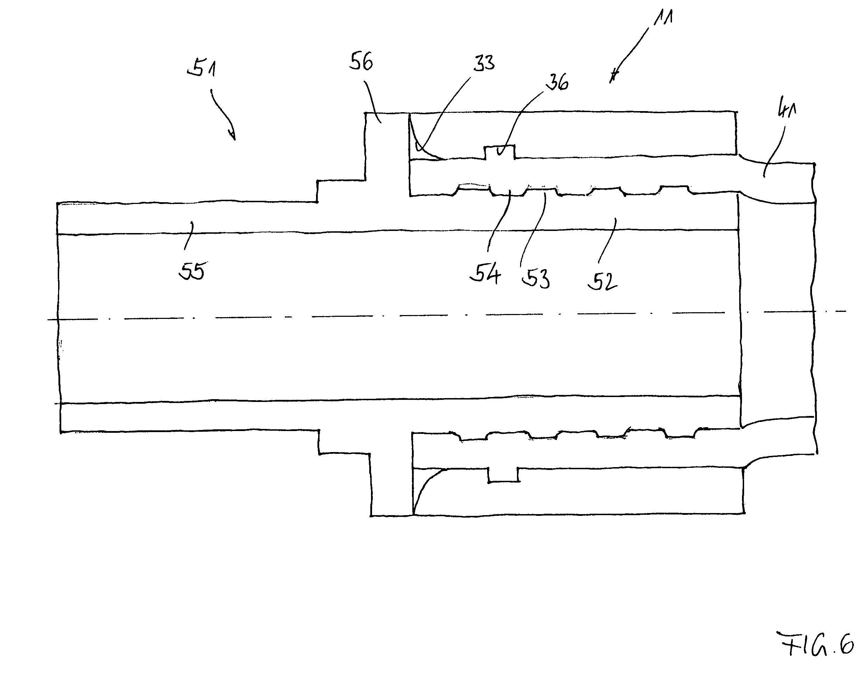

In Figur 6 ist die erfindungsgemäße Verbindungs-Anordnung zwischen einem verformbaren Schlauchende 41 und einem Anschlussstutzen 51 und einer erfindungsgemäßen Schiebehülse 11 dargestellt. Der Anschlussstutzen 51 hat einen Anschlagflansch 56, ein erstes Stutzenende 52 mit außenliegenden Rippen 53 und dazwischenliegenden Nuten 54, sowie ein zweites glattes Stutzenende 55 z. B. zum Anschweißen oder Anschrauben. Auf das erste Stutzenende 52 ist das Schlauchende 41 bis zum Anschlag am Flansch 56 aufgeschoben, wobei das Schlauchende 41 radial aufgeweitet worden ist.

Die zuvor mit Spiel auf das Schlauchende 41 aufgefädelte erfindungsgemäße Schiebehülse 11 ist anschließend von rechts nach links bis zum Anschlag am Flansch 54 auf das Schlauchende 41 aufgeschoben worden, wobei sich Formschlußverbindungen der Innenseite des Schlauchendes mit den Rippen 53 und Nuten 54 sowie ein formschlüssiger Eingriff von Schlauchmaterial in die Innennut 36 der Schiebehülse 11 ausgebildet haben. Das Schlauchende 41 ist hiermit formschlüssig zwischen Stutzenende 52 und Schiebehülse 11 festgelegt, so daß eine Verbindung entstanden ist, die das Schlauchende auch bei hohen gegebenenfalls pulsierenden Innendrücken im Fluidsystem Schlauch auf dem Anschlußstutzen 51 festhält.

Bezugszeichenliste

| 11 | Schiebehülse |
| 12 | Lasche |
| 13 | Bandendkante |
| 14 | Bandende |
| 15 | Ausnehmung |
| 16 | Bandendkante |
| 17 | Bandende |
| 18 | Kopfformation |
| 19 | Stielformation |
| 20 | Überhang |
| 21 | Überhang |
| 22 | Lasche |
| 23 | Schwalbenschwanzformationen |
| 24 | Ausnehmung |
| 28 | Kopfformation |
| 29 | Stielformation |
| 30 | Überhang |
| 31 | Überhang |
| 33 | Rundung |
| 34 | Vertiefung |

| 35 | Fase |
| 36 | Nut |
| 41 | Schlauchende |
| 51 | Anschlußstutzen |
| 52 | Stutzende |
| 53 | Rippe |
| **54** | Nut |
| 55 | Stutzende |
| 56 | Flansch |

**Patentansprüche**

1. Schiebehülse (11) zur Festlegung eines Schlauch- oder Rohrendes auf einem Anschlußstutzen, wobei die Schiebehülse aus einem rundgebogenen Bandabschnitt (41) aus Metallband besteht und am Stoß der Bandendkanten (13, 16) mit einer formschlüssigen Verbindung verbunden ist.

2. Schiebehülse nach Anspruch 1,
**dadurch gekennzeichnet,**
**daß** die formschlüssige Verbindung von ineinandergreifenden Formschluß-Elementen gebildet wird, die in Umfangsrichtung betrachtet Hinterschneidungen aufweisen.

3. Schiebehülse nach einem der Ansprüche 1 oder 2,
**dadurch gekennzeichnet,**
**daß** die Schiebehülse (11) eine - insbesondere plastisch umgeformte - Innenkante aufweist, die eine Aufgleitrundung (33) oder eine Aufgleitfase (35) bildet.

4. Schiebehülse nach einem der Ansprüche 1 bis 3,
**dadurch gekennzeichnet,**
**daß** die Schiebehülse (11) auf dem Innenumfang - insbesondere plastisch eingeformte- Einzelvertiefungen (34) zur formschlüssigen Aufnahme von Material des Schlauch- oder Rohrendes aufweist.

5. Schiebehülse nach einem der Ansprüche 1 bis 3 ,
**dadurch gekennzeichnet,**
**daß** die Schiebehülse (11) auf dem Innenumfang eine - insbesondere plastisch eingeformte - Umfangsnut (36) zur formschlüssigen Aufnahme von Material des Schlauch- oder Rohrendes aufweist.

6. Schiebehülse nach einem der Ansprüche 1 bis 5,
**dadurch gekennzeichnet,**
**daß** die Formschluß-Elemente eine mittige pilzförmige Lasche (12) auf einer ersten geraden Bandendkante (13) und eine formgleiche pilzförmige Ausnehmung (15) ausgehend von der zweiten Bandendkante (16),umfassen (Figur 1).

**7.** Schiebehülse nach einem der Ansprüche 1 bis 5, **dadurch gekennzeichnet,** **daß** die Formschluß-Elemente eine mittige Lasche (12) in Form zumindest zweier aufeinanderstehender Pilze auf einer ersten Bandendkante (13) und eine formgleiche mittige Ausnehmung (15) in Form zumindest zweier aufeinanderstehender Pilze ausgehend von der zweiten geraden Bandendkante (16) umfassen (Figur 2).

**8.** Schiebehülse nach einem der Ansprüche 1 bis 5, **dadurch gekennzeichnet,** **daß** die Formschluß-Elemente eine Mehrzahl von nebeneinanderliegenden Schwalbenschwanzformationen (23) an einer ersten Bandendkante (13) und eine Mehrzahl von formgleichen Ausnehmungen (24) an der zweiten Bandendkante (16) umfassen (Figur 3).

**9.** Schiebehülse nach einem der Ansprüche 6 bis 7, **dadurch gekennzeichnet,** **daß** eine Kopfformation (18) der Pilzform eine größte Breite $B_p$ von zwischen 45 und 60% der Bandbreite $B_t$ des Bandabschnitts (41) hat.

**10.** Schiebehülse nach einem der Ansprüche 6 bis 7 oder 9, **dadurch gekennzeichnet,** **daß** eine Stielformation (19) der Pilzform eine geringste Breite $B_smin$ von zwischen 25% und 35% der Bandbreite $B_t$ des Bandabschnitts (41) hat.

**11.** Schiebehülse nach einem der Ansprüche 9 bis 10, **dadurch gekennzeichnet,** **daß** die Stielformation (19) der Pilzform nahe der Kopfformation (18) eine größte Breite $B_smax$ von zwischen 30% und 40% der Bandbreite $B_t$ des Bandabschnitts (41) hat.

**12.** Schiebehülse nach einem der Ansprüche 6 bis 7 oder 9 bis 11, **dadurch gekennzeichnet,** **daß** die Lasche (12) eine Gesamthöhe $H_P$ von zwischen 50% und 65% ihrer maximalen Breite $B_P$ hat.

**13.** Schiebehülse nach einem der Ansprüche 1 bis 12, **dadurch gekennzeichnet,** **daß** sie aus vergütetem Stahl, insbesondere vergütetem Edelstahl besteht.

**14.** Schiebehülse nach einem der Ansprüche 1 bis 12, **dadurch gekennzeichnet,** **daß** sie aus unvergütetem Stahl, insbesondere Edelstahl besteht.

**15.** Verfahren zur Herstellung einer Hülse zur Festlegung eines Schlauch- oder Rohrendes auf einem Anschlußstutzen,

**dadurch gekennzeichnet,** **daß** von endlosem Metallband Bandabschnitte (41) abgeteilt werden, wobei die Trennstellen jeweils formschlüssige Verbindungselemente bilden, und **daß** die Bandabschnitte (41) so rundgebogen werden, daß ein Verbindungselement an einer Bandendkante (13) in ein Verbindungselement an der anderen Bandendkante (16) formschlüssig eingreift.

**16.** Verfahren nach Anspruch 15, **dadurch gekennzeichnet,** **daß** das Metallband - insbesondere vor dem Abteilen der Bandabschnitte (41) - längs einer Kante gerollt wird, die nach dem Rundbiegen zu einer Innenkante wird, um eine Aufgleitrundung (33) oder eine Aufgleitfase (35) zu bilden.

**17.** Verfahren nach einem der Ansprüche 15 oder 16, **dadurch gekennzeichnet,** **daß** das Metallband - insbesondere vor dem Abteilen der Bandabschnitte (41) - mit Abstand zu einer Kante mit periodisch angeordneten Einprägungen (34) versehen wird, die nach dem Rundbiegen auf dem Innenumfang verteilt liegen.

**18.** Verfahren nach einem der Ansprüche 15 oder 16, **dadurch gekennzeichnet,** **daß** das Metallband - insbesondere vor dem Abteilen der Bandabschnitte (41) - mit Abstand zu einer Kante mit einer gerollten Längsnut (36) versehen wird, die nach dem Rundbiegen auf den Innenumfang liegt.

**19.** Verfahren nach einem der Ansprüche 15 bis 18, **dadurch gekennzeichnet,** **daß** die Bandendkanten (13, 16) der Bandabschnitte (41) jeweils mit einer mittigen pilzförmigen Lasche (12) bzw. einer formgleichen mittigen pilzförmigen formgleichen Ausnehmung (18) abgeteilt werden.

**20.** Verfahren nach einem der Ansprüche 15 bis 18, **dadurch gekennzeichnet,** **daß** die Bandendkanten (13, 16) der Bandabschnitte (41) jeweils mit einer mittigen Lasche in Form zumindest zweier aufeinanderstehender Pilze und einer formgleichen mittigen Ausnehmung in Form zweier aufeinanderstehender Pilze abgeteilt werden.

**21.** Verfahren nach einem der Ansprüche 15 bis 18, **dadurch gekennzeichnet,** **daß** die Bandendkanten (13, 16) der Bandabschnitte jeweils mit einer Mehrzahl von nebeneinanderliegenden Schwalbenschwanzformation (23) und einer Mehrzahl von formgleichen Ausnehmungen (24) abgeteilt werden.

**22.** Verfahren nach einem der Ansprüche 15 bis 21,

**dadurch gekennzeichnet,**
**daß** beim Ineinanderfügen der Verbindungselemente an den Bandenden (13, 16) der Bandabschnitte (41) beim Rundbiegen eine radiale Prägung oder Quetschung des Bandmaterials erfolgt, so daß die Verbindungselemente mit Vorspannung verpreßt sind.

23. Verfahren nach einem der Ansprüche 15 bis 21, **dadurch gekennzeichnet,**
**daß** nach dem Ineinanderfügen der Verbindungselemente an den Bandenden (13, 16) der Bandabschnitte (41) eine radiale Prägung oder Quetschung des Spannringmaterials erfolgt, so daß die Verbindungselemente mit Vorspannung verpreßt sind.

24. Verfahren nach einem der Ansprüche 15 bis 23, **dadurch gekennzeichnet,**
**daß** Metallband aus Vergütungsstahl bereitgestellt wird und daß die Schiebehülse nach dem Ineinanderfügen der Verbindungselemente vergütet wird.

FIG. 1

FIG. 2

FIG.3

EP 1 930 644 A1

FIG.4

FIG.5

EP 1 930 644 A1

FIG. 6

EP 1 930 644 A1

**Europäisches**
**Patentamt**

**EUROPÄISCHER RECHERCHENBERICHT**

Nummer der Anmeldung

EP 07 02 3604

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 196 39 794 A1 (K DIETZEL GMBH DIPL ING [DE]) 2. April 1998 (1998-04-02) | 1-6,8, 13-19, 21-24 | INV. F16L33/22 F16L13/14 |
| A | * Spalte 1, Zeile 3 - Spalte 2, Zeile 54 * | 7,9-12, 20 | |
| | * Spalte 3, Zeile 62 - Spalte 4, Zeile 31; Abbildungen 1-6 * ----- | | |
| D,X | DE 40 21 746 A1 (GKN AUTOMOTIVE AG [DE]) 16. Januar 1992 (1992-01-16) | 1,2, 6-15, 19-21, 23,24 | |
| A | * Spalte 1, Zeile 43 - Spalte 2, Zeile 46; Abbildungen * ----- | 22 | |
| D,X | DE 40 09 259 A1 (OETIKER HANS MASCHINEN [CH]) 11. Oktober 1990 (1990-10-11) | 1,2,6, 13-15, 19,23,24 | |
| A | * Spalte 1, Zeile 3 - Spalte 2, Zeile 10 * | 7-12, 20-22 | |
| | * Spalte 3, Zeile 4 - Spalte 4, Zeile 23 * * Spalte 5, Zeile 50 - Spalte 6, Zeile 49; Abbildungen 6,7 * ----- | | RECHERCHIERTE SACHGEBIETE (IPC) F16L |
| A | DE 10 2004 037690 B3 (JOERG VOGELSANG GMBH & CO KG [DE]) 15. September 2005 (2005-09-15) * Absatz [0002] - Absatz [0010] * * Absatz [0022] - Absatz [0025] * * Abbildungen * ----- | 1-3, 6-16, 19-24 | |
| D,A | DE 88 05 379 U1 (REHAU AG + CO, 8673 REHAU, DE) 1. Juni 1988 (1988-06-01) * Ansprüche; Abbildungen * ----- | 1,3-5 | |

Der vorliegende Recherchenbericht wurde für alle Patentansprüche erstellt

| Recherchenort | Abschlußdatum der Recherche | Prüfer |
|---|---|---|
| München | 7. März 2008 | Vecchio, Giovanni |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
..............................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 07 02 3604

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-03-2008

| Im Recherchenbericht angeführtes Patentdokument | Datum der Veröffentlichung | Mitglied(er) der Patentfamilie | Datum der Veröffentlichung |
|---|---|---|---|
| DE 19639794 A1 | 02-04-1998 | WO 9813637 A1 | 02-04-1998 |
| | | EP 0925467 A1 | 30-06-1999 |
| | | ES 2194188 T3 | 16-11-2003 |
| | | JP 2001501287 T | 30-01-2001 |
| | | KR 20000048670 A | 25-07-2000 |
| | | US 6296283 B1 | 02-10-2001 |
| DE 4021746 A1 | 16-01-1992 | FR 2664347 A1 | 10-01-1992 |
| | | GB 2247041 A | 19-02-1992 |
| | | IT 1248574 B | 19-01-1995 |
| | | JP 2047401 C | 25-04-1996 |
| | | JP 4249605 A | 04-09-1992 |
| | | JP 7065604 B | 19-07-1995 |
| | | US 5150503 A | 29-09-1992 |
| DE 4009259 A1 | 11-10-1990 | AT 398814 B | 27-02-1995 |
| | | AT 75590 A | 15-06-1994 |
| | | AU 626054 B2 | 23-07-1992 |
| | | AU 5253590 A | 11-10-1990 |
| | | BE 1004368 A5 | 10-11-1992 |
| | | BR 9001497 A | 16-04-1991 |
| | | CA 2013159 A1 | 04-10-1990 |
| | | CH 679945 A5 | 15-05-1992 |
| | | CZ 9001683 A3 | 13-09-1995 |
| | | DD 297487 A5 | 09-01-1992 |
| | | DK 84090 A | 05-10-1990 |
| | | ES 2022005 A6 | 16-11-1991 |
| | | FI 96900 B | 31-05-1996 |
| | | FR 2645220 A1 | 05-10-1990 |
| | | GB 2232193 A | 05-12-1990 |
| | | HU 55878 A2 | 28-06-1991 |
| | | IT 1239516 B | 03-11-1993 |
| | | JP 2292506 A | 04-12-1990 |
| | | JP 3253610 B2 | 04-02-2002 |
| | | MX 173863 B | 07-04-1994 |
| | | NL 9000683 A | 01-11-1990 |
| | | NO 901489 A | 05-10-1990 |
| | | PL 164224 B1 | 29-07-1994 |
| | | PT 93666 A | 20-11-1990 |
| | | RO 106907 B1 | 30-07-1993 |
| | | SE 509794 C2 | 08-03-1999 |
| | | SE 9001151 A | 05-10-1990 |
| | | SK 168390 A3 | 08-04-1998 |
| | | US 5001816 A | 26-03-1991 |
| | | ZA 9002304 A | 28-12-1990 |

EPO FORM P0461

Für nähere Einzelheiten zu diesem Anhang : siehe Amtsblatt des Europäischen Patentamts, Nr.12/82

**ANHANG ZUM EUROPÄISCHEN RECHERCHENBERICHT**
**ÜBER DIE EUROPÄISCHE PATENTANMELDUNG NR.**

EP 07 02 3604

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-03-2008

| Im Recherchenbericht angeführtes Patentdokument | Datum der Veröffentlichung | Mitglied(er) der Patentfamilie | Datum der Veröffentlichung |
|---|---|---|---|
| DE 102004037690 B3 | 15-09-2005 | KEINE | |
| DE 8805379 U1 | 01-06-1988 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 8805379 U1
- DE 8813209 U1
- DE 1034528684
- DE 4009259 A1
- DE 4021746 C2